## Europäisches Patentamt
## European Patent Office
## Office européen des brevets

(19)

(11) Numéro de publication: **0 224 399 B1**

---

(12)

# FASCICULE DE BREVET EUROPEEN

(45) Date de publication du fascicule du brevet:
16.05.90

(51) Int. Cl.⁵: **F16C 1/22**

(21) Numéro de dépôt: 86402309.8

(22) Date de dépôt: 15.10.86

---

(54) **Dispositif de commande mécanique à câble à réglage manuel.**

---

(30) Priorité: 25.10.85 FR 8515883

(43) Date de publication de la demande:
03.06.87 Bulletin 87/23

(45) Mention de la délivrance du brevet:
16.05.90 Bulletin 90/20

(84) Etats contractants désignés:
DE ES GB IT

(56) Documents cités:
EP-A- 0 048 620
WO-A-84/01196
WO-A-85/03113
DE-A- 3 116 456
GB-A- 2 069 090
GB-A- 2 157 789

(73) Titulaire: **Société des Câbles du Mans Société Anonyme, 50, Avenue de la Libération, 72000 Le Mans(FR)**

(72) Inventeur: **Deligny, Jean, 132, rue du Villaret, F-72000 Le Mans(FR)**
Inventeur: **Guidicelli, Charles, 5, rue du Bon Vouloir Saint-Jean du Bois, F-72430 Noyen(FR)**

(74) Mandataire: **Lewis, David Overington, Babcock International plc 217 Tabard Street, London SE1 4UR(GB)**

---

ACTORUM AG

## Description

La présente invention concerne les dispositifs de commande mécanique à câble du type comprenant un câble coulissant dans un conduit de câble, par exemple pour la commande d'embrayage ou de freins de véhicules, et comportant une structure d'embout intérieure tubulaire reliée à une première extrémité du conduit de câble, montée à coulissement dans une structure d'embout tubulaire extérieure coaxiale et comportant une zone extérieure dentée, un organe de verrouillage à actionnement manuel, comprenant une zone intérieure dentée, montée dans la structure d'embout extérieure de façon a pouvoir être déplacée radialement entre une position de verrouillage, avec sa zone dentée intérieure coopérant en engagement avec la zone dentée extérieure de la structure d'embout intérieure, et une position de déverrouillage, et un ressort sollicitant axialement la structure d'embout intérieure par rapport à la structure d'embout extérieure.

Un dispositif de commande mécanique à câble de ce type est décrit dans le document GB-A-1302383. Dans le dispositif de ce document, la première extrémité du conduit de câble est montée dans une structure d'embout intérieure traversant la structure d'embout extérieure et prolongée par une extension tubulaire comportant une collerette de butée venant en appui, lors du montage initial du dispositif, contre la structure d'embout extérieure sous l'effet d'un ressort de sollicitation interposé entre une autre collerette de butée de la structure d'embout intérieure et la structure d'embout extérieure. L'organe de verrouillage, du type à tiroir, est monté dans une fente radiale traversante de la structure d'embout extérieure et est amené en position de verrouillage en le forçant radialement autour de la structure d'embout intérieure pour solidariser entre elles les deux structures d'embout après avoir déplacé manuellement la structure d'embout intérieure, à l'encontre du ressort de sollicitation axiale, pour amener l'extrémité correspondante du câble à la distance voulue de la structure d'embout extérieure montée dans une paroi stationnaire. Le dipositif de ce document ne permet pas un réglage automatique du dispositif de commande mécanique à câble lors de sa mise en place in situ, par exemple dans un véhicule, l'agencement de l'organe de verrouillage ne se prêtant pas à une intervention ultérieure, en vue d'un autre réglage éventuel, par exemple lors d'une visite technique au bout d'un certain temps d'utilisation de l'équipement auquel est associé le dispositif de commande mécanique à câble.

La présente invention a pour objet de proposer un dispositif perfectionné de commande mécanique à câble, de conception fiable et robuste, de faibles coûts de fabrication, permettant une mise à longueur automatique lors de l'installation in situ et autorisant de façon très simple une intervention ultérieure pour un complément de mise à longueur s'effectuant également de façon automatique.

Pour ce faire, selon une caractéristique de l'invention, le dispositif comporte un organe d'actionnement monté coulissant sur la structure d'embout extérieure, l'organe de verrouillage et l'organe d'actionnement comportant une première paire de surfaces· de rampes coopérantes agencées de façon qu'un déplacement axial de l'organe d'actionnement dans une première direction sollicite l'organe de verrouillage en déplacement vers sa position de déverrouillage, et une seconde paire de surfaces de rampes coopérantes agencées de façon qu'un déplacement axial de l'organe d'actionnement dans une seconde direction, opposée à ladite première direction, sollicite l'organe de verrouillage vers sa position de verrouillage, le ressort étant disposé entre la structure d'embout intérieure et l'organe d'actionnement et sollicitant ce dernier dans ladite seconde direction.

Selon une autre caractéristique de l'invention, le conduit de câble est divisé en deux tronçons axialement disjoints solidarisés chacun à une structure d'embout associée.

Avec un agencement selon l'invention non nécessairement associé à une cloison stationnaire, lors de l'installation in situ du dispositif de commande mécanique à câble, avec les extrémités du câble reliées respectivement à l'organe d'actionnement et l'organe à actionner, une simple pression axiale sur l'organe d'actionnement pour le déplacer vis-à-vis de la structure d'embout extérieure à l'encontre du ressort de sollicitation permet à ce dernier de placer sous compression le conduit de câble pour récupérer automatiquement les jeux fonctionnels existants. En relâchant l'organe d'actionnement, le dispositif adopte une configuration verrouillée qu'il conservera jusqu'à une intervention postérieure éventuelle, identique, par simple action sur l'organe d'actionnement, pour corriger, de nouveau automatiquement, les jeux fonctionnels qui auraient pu apparaître lors de la durée d'utilisation du système associé au dispositif de commande à câble.

La présente invention a également pour objet de proposer un dispositif de commande mécanique à câble du type sus-mentionné comportant une enveloppe de protection et d'étanchéïté de conception simplifiée et de faibles coûts de fabrication et de mise en place.

Pour ce faire, selon une autre caractéristique de l'invention, les structures d'embouts présentent chacune, de part et d'autre de l'organe d'actionnement, une zone de diamètre élargie, une de ces zones de diamètre élargi ayant un diamètre extérieur supérieur au diamètre extérieur maximum de l'organe d'actionnement, l'enveloppe protectrice étant constituée d'un film tubulaire en matériau plastique étirable étiré par engagement sur cette première zone de diamètre élargi puis solidarisée sur les deux zones de diamètre élargi, avantageusement par simple collage ou thermo-soudage.

D'autres caractéristiques et avantages de la présente invention ressortiront de la description suivante d'un mode de réalisation donné à titre illustratif mais nullement limitatif, faite en relation avec les dessins annexés sur lesquels :

la Figure 1 est une vue en coupe longitudinale d'un dispositif de commande mécanique à câble selon l'invention ;

la Figure 2 est une vue en coupe transversale partielle suivant le plan de coupe 2 de la figure 1 ; et

la Figure 3 est une vue du dessus du dispositif de la figure 1.

Dans le mode de réalisation représenté sur les figures, le dispositif de commande mécanique à câble comprend une longueur de câble d'actionnement 1 s'étendant à coulissement dans un conduit de câble séparé, ici, en deux tronçons de conduits axialement disjoints 2a, 2b dont les extrémités adjacentes sont montées dans des chambrages 3 et 4 d'une structure d'embout intérieure tubulaire 5 et d'une structure d'embout extérieure tubulaire 6, respectivement, disposées en un point intermédiaire quelconque de la commande mécanique à câble. La structure d'embout intérieure 5 comporte un fût tubulaire 7, traversé par la portion libre du câble 1 entre les tronçons de conduit 2a et 2b, présentant une zone d'extrémité extérieurement dentée 8 et montée à coulissement dans un alésage borgne 9 de la structure d'embout extérieure 6. Cette dernière comporte au moins un, typiquement deux lumières radiales diamétralement opposées 10 dans lesquelles sont reçues à coulissement radial des parties de corps 11 munies de dentures intérieures 12 d'organes de verrouillage, désignés généralement par la référence 13. Sur une partie principale cylindrique de la structure d'embout extérieure 6 est monté à coulissement un organe d'actionnement, désigné généralement par la référence 14, comportant une partie cylindrique 15 engagée sur la structure d'embout 6 et prolongée par une partie cônique s'évasant vers l'extérieur 16 et se raccordant à la partie cylindrique de guidage à coulissement 15 par un épaulement radial 17 formant appui pour un ressort de sollicitation axiale 18 co-axial à la partie cylindrique 15 de l'organe d'actionnement 14 et aux structures d'embout 5 et 6, et prenant son autre appui sur un épaulement 19 formé par une extrémité de diamètre élargi de la structure d'embout intérieur 5 opposée à la zone d'extrémité dentée 8 de cette dernière.

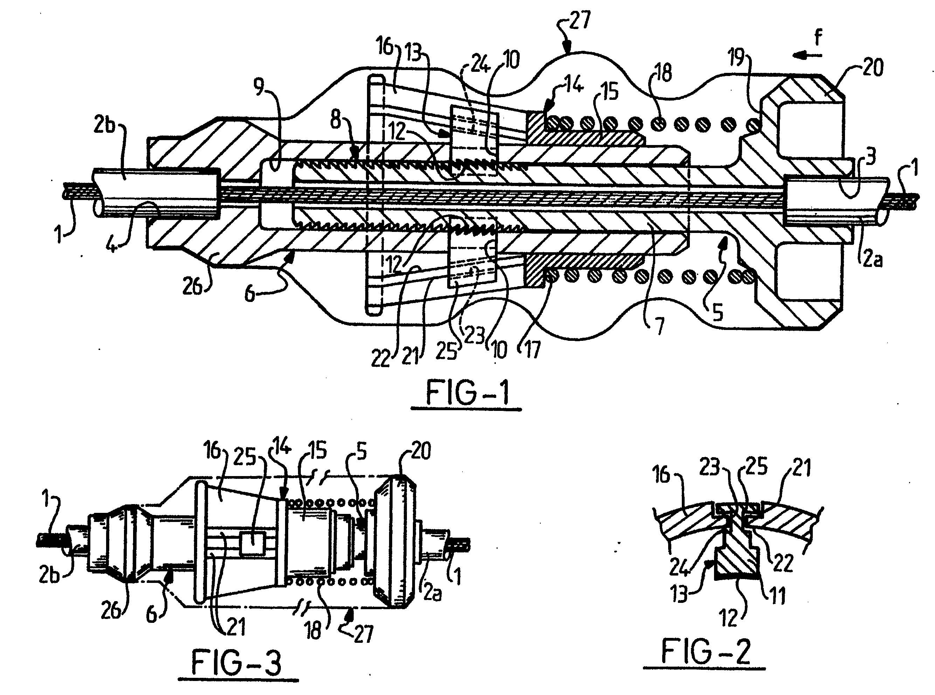

Comme on le voit bien sur la figure 2, dans la partie cônique 16 de l'organe d'actionnemnt 14 sont ménagées deux fentes en T définissant chacune deux premières surfaces de rampe externes 21 et deux surfaces de rampe internes 22 coopérant avec des surfaces de rampe correspondantes 23 et 24 formées par une partie extérieure 25 de l'organe de verrouillage 13 présentant au moins un, typiquement deux profils latéraux symétriques opposés en forme de U pour être reçue à coulissement axial dans la fente en T de la partie cônique 16 de l'organe d'actionnement 14.

On comprendra que, le ressort de sollicitation axial 18 agissant entre les structures d'embout 5 et 6 par l'intermédiaire de l'organe d'actionnement 14 et des organes de verrouillage 13, maintient normalement le dispositif dans la configuration verrouillée représentée sur la figure 1, le ressort 18 maintenant, même en présence de vibrations, l'effet de coin exercé par les surfaces de rampes 22 de l'organe d'actionnement 14 sur les surfaces de rampes 24 des organes de verrouillages 13 pour maintenir fermement les dents 12 de ces derniers en engagement avec les dents 8 de la structure d'embout intérieure 5. Par contre, en déplaçant axialement, vers la droite sur la figure 1, l'organe d'actionnement 14 relativement à la structure d'embout extérieure 6, à l'encontre du ressort 18, les surfaces de rampes supérieures 21 des fentes en T de l'organe d'actionnement 14 dégagent, par coopération avec les surfaces de rampe 23 des organes de verrouillages 13, ces derniers radialement vers l'extérieur en permettant ainsi à la structure d'embout intérieure 5 de se déplacer axialement par rapport à la structure d'embout extérieure 6 pour trouver la position relative requise sous l'effet du ressort 18. En relâchant l'organe d'actionnement 14, le ressort 18 amène immédiatement l'organe d'actionnement 14 à reverrouiller les organes de verrouillages 13 en engagement avec les dentures de la structure d'embout intérieure 5.

Comme on le voit bien sur la figure 1, les dents 8 de la structure d'embout intérieure 5, qui sont parallèles entre elles et non pas réparties suivant un pas hélicoïdal, présentent une inclinaison vers l'extrémité de la structure d'embout intérieure 5 opposé à l'extrémité de diamètre élargi 20, les dents des organes de verrouillage 13 présentant une inclinaison correspondante. La cônicité de la partie cônique 16 de l'organe d'actionnement 14 est typiquement de l'ordre de 10 à 12 degrés, et l'ensemble des éléments constitutifs du dispositif de réglage (à l'exclusion du ressort 18) est avantageusement réalisé en matériaux thermo-plastiques, de préférence chargés de fibres de verre, par exemple dans une proportion de 30 %, en térephtalate de polybutylène (PBT) ou en polyamide.

Selon un autre aspect de l'invention, comme on le voit bien sur les dessins, la structure d'embout extérieure 6 comporte également, à l'opposé de sa partie principale cylindrique, une partie d'extrémité de diamètre élargi 26 présentant, comme la partie d'extrémité de diamètre élargi de la structure d'embout intérieure 5, une zone périphérique cylindrique prolongée par une partie convergeant vers l'extérieur. L'une de ces zones d'extrémité de diamètre élargi, en l'occurence l'extrémité de la structure d'embout intérieure 5, présente un diamètre extérieur supérieur au diamètre extérieur maximum de la partie cônique 16 de l'organe d'actionnement 14, la partie d'extrémité de diamètre élargi (26) de l'autre structure d'embout (6) présentant un diamètre extérieur inférieur à ce diamètre extérieur maximum de l'organe d'actionnement 14. Conformément à un aspect de l'invention, sur la partie d'extrémité du plus grand diamètre 20 est engagé à force, axialement comme figuré par la flèche f sur la figure 1, un film tubulaire de matériau plastique étirable, par exemple de polyéthylène, de diamètre nominal, au repos, inférieur au diamètre de la petite extrémité de diamètre élargi (26), le film tubulaire ainsi étiré étant coupé avec la sur-longueur nécessaire pour qu'il ménage des ondulations intermédiaires puis solidarisé sur la périphérie des extrémités de diamètre élargi 20, 26, par dcollage ou thermo-soudure sur le matériau plastique constitutif des structures d'embout, pour constituer ainsi une enveloppe de protection et d'étanchéité 27 particulièrement bon marché isolant les zones de coulissement des structures d'embout, l'organe d'actionnement et les organes de verrouillages des contaminations extérieures.

Quoique la présente invention ait été décrite en relation avec un mode de réalisation particulier, elle ne s'en trouve pas limitée, mais est au contraire susceptible de modifications et de variantes qui apparaîtront à l'homme de l'art. En particulier, au lieu de prévoir deux structures d'embout ménagées en un point intermédiaire de la commande mécanique à câble entre deux tronçons disjoints du conduit de câble, on peut prévoir la structure d'embout extérieure 6 montée dans un orifice d'une paroi stationnaire au voisinage de l'organe d'actionnement ou de l'organe à actionner couplés au câble 1.

## Revendications

1. Dispositif de commande mécanique à câble à réglage manuel, comprenant: un câble (1) coulissant dans un conduit de câble (2a, 2b), une structure d'embout intérieure tubulaire (5) reliée à une première extrémité du conduit de câble, montée à coulissement dans une structure d'embout tubulaire extérieure coaxiale (6) et comportant une zone extérieure dentée (8), un organe de verrouillage à actionnement manuel (13) comprenant une zone intérieure dentée (12), monté dans la structure d'embout extérieure (6) de façon à pouvoir être déplacé radialement entre une position de verrouillage, avec sa zone dentée intérieure (12) coopérant en engagement avec la zone dentée extérieure (8) de la structure d'embout intérieure (5), et une position de déverrouillage, et un ressort (18) sollicitant axialement la structure d'embout intérieure (5) par rapport à la structure d'embout extérieure (6), caractérisé en ce qu'il comporte un organe d'actionnement (14) monté coulissant sur la structure d'embout extérieur (6), l'organe d'actionnement (14) et l'organe de verrouillage (13) comportant une première paire de surfaces de rampes coopérantes (21, 23) agencées de façon qu'un déplacement axial de l'organe d'actionnement (14) dans une première direction sollicite l'organe de verrouillage (13) en déplacement vers sa position de déverrouillage, et une seconde paire de surfaces de rampes coopérantes (22, 24) agencées de façon qu'un déplacement axial de l'organe d'actionnement (14) dans une seconde direction, opposée à ladite première direction, sollicite l'organe de verrouillage (13) vers sa position de verrouillage, le ressort (18) étant disposé entre la structure d'embout intérieure (5) et l'organe d'actionnement (14) et sollicitant ce dernier dans ladite seconde direction.

2. Dispositif selon la revendication 1, caractérisé en ce que l'organe d'actionnement (14) est tubulaire et comporte une partie cylindrique (15) montée à coulissement sur la structure d'embout extérieure (6) et une partie cônique (16) s'évasant dans la direction opposée au ressort (18) et formant lesdites surfaces de rampes (21; 22).

3. Dispositif selon la revendication 2, caractérisé en ce que les surfaces de rampes (21; 22) de l'organe d'actionnement (14) sont formées par une fente en T s'étendant axialement dans la partie cônique (16), l'organe de verrouillage (13) comportant une partie extérieure (25) présentant au moins un profil latéral en forme de U engagé dans la fente en T.

4. Dispositif selon la revendication 2 ou la revendication 3, caractérisé en ce que la partie cônique (16) se raccorde à la partie cylindrique (15) par un épaulement (17) formant appui pour le ressort (18).

5. Dispositif selon l'une quelconque des revendications précédentes, caractérisé en ce que les structures d'embouts intérieure (5) et extérieure (6) présentent chacune, de part et d'autre de l'organe d'actionnement (14), une zone de diamètre élargi (20; 26) pour le montage d'une enveloppe protectrice tubulaire (27).

6. Dispositif selon la revendication 5, caractérisé en ce qu'une première (20) desdites zones de diamètre élargi (20; 26) a un diamètre extérieur supérieur au diamètre extérieur maximum de l'organe d'actionnement (14), l'enveloppe protectrice (27) étant constituée d'un film tubulaire en matériau plastique étirable étiré par engagement axial sur cette première zone de diamètre élargi (20) puis solidarisée auxdites zones de diamètre élargi (20, 26).

7. Dispositif selon la revendication 6, caractérisé en ce que le film tubulaire (27) est en polyéthylène.

8. Dispositif selon l'une quelconque des revendications précédentes, caractérisé en ce que les structures d'embout (5, 6), l'organe de verrouillage (13) et l'organe d'actionnement (14) sont réalisés en matériaux plastiques.

9. Dispositif selon l'une quelconque des revendications précédentes, caractérisé en ce que le conduit de câble est divisé en deux tronçons de conduit (2a, 2b) solidarisés chacun à une structure d'embout associée (5; 6).

## Claims

1. Mechanical cable-control device with manual adjustment comprising a cable (1) sliding in a cable sheath (2a, 2b), a tubular inner connector structure (5) connected to a first end of the cable duct, mounted slideably in a coaxial outer tubular connector structure (6) and having a toothed outer zone (8), a manually actuatable locking member (13) having a toothed inner zone (12) and mounted in the outer connector structure (6) so as to be radially displaceable between a locking position, with its inner toothed zone (12) cooperating in engagement with said outer toothed zone (8) of said inner connector structure (5), and a release position, and a spring (18) axially biasing said inner connector structure (5) in relation to said outer connector structure (6), characterized in that it comprises an actuating member (14) mounted slideably on said outer connector structure (6), said actuating member (14) and said locking member (13) having a first pair of cooperating ramp surfaces (21, 23) designed so that an axial displacement of said actuating member (14) in a first direction biases said locking member (13) displaceably towards its release position, a second pair of cooperating ramp surfaces (22, 24) designed so that an axial displacement of said actuating member (14) in a second direction opposed to the said first direction biases said locking member (13) towards its locking position, said spring (18) being arranged between said inner connector structure (5) and said actuating member (14) and biassing the latter in the said second direction.

2. Device according to Claim 1, characterised in that said actuating member (14) is tubular and has a cylindrical part (15) mounted slideably on said outer connector structure (6) and a conical part (16) widening in the opposite direction to said spring (18) and forming said ramp surfaces (21; 22).

3. Device according to Claim 2, characterised in that said ramp surfaces (21; 22) of said actuating member (14) are formed by an axially extending T-shaped slot formed in said conical part (16), said locking member (13) having an outer part (25) with at least one lateral U-shaped profile engaged in the T-shaped slot.

4. Device according to Claim 2 or Claim 3, characterised in that said conical part (16) is connected to said cylindrical part (15) by means of a shoulder (17) forming a bearing for said spring (18).

5. Device according to any one of the preceding claims, characterised in that said inner connector structure (5) and outer connector structure (6) each have a zone of widened diameter (20; 26) on either side of said actuating member (14), for the fitting of a tubular protective casing (27).

6. Device according to Claim 5, characterised in that a first (20) of said zones of widened diameter (20; 26) has an outside diameter greater than the maximum outside diameter of said actuating member (14), said protective casing (27) consisting of a tubular film made of stretchable plastic material which is stretched by being engaged axially over this first zone of widened diameter (20) and then secured to said zones of widened diameter (20, 26).

7. Device according to Claim 6, characterised in that said tubular film (27) consists of polyethylene.

8. Device according to any one of the preceding claims, characterised in that said connector structures (5, 6), said locking member (13) and said actuating member (14) are made of plastics.

9. Device according to any one of the preceding claims, characterised in that said cable sheath is divided into two sheath portions (2a, 2b), each secured to an associated connector structure (5; 6).

## Patentansprüche

1. Seilzug mit handbetätigter Einstellvorrichtung, mit folgenden Merkmalen:
ein Kabel (1) gleitet in einer Führungshülle (2a, 2b);
eine innere, rohrförmige Hülsenstruktur (5) ist mit einem ersten Ende der Führungshülle verbunden, für eine Gleitbewegung in einer koaxial angeordneten, äußeren, rohrförmigen Hülsenstruktur (6) montiert und weist eine äußere gezahnte Zone (8) auf;
ein von Hand zu betätigendes Verriegelungsorgan (13) weist eine innenliegende, gezahnte Zone (12) auf, die in der äußeren Hülsenstruktur (6) in der Weise montiert ist, daß das Verriegelungsorgan zwischen einer Verriegelungsstellung, bei der seine innere gezahnte Zone (12) durch Eingriff mit der äußeren gezahnten Zone (8) der inneren Hülsenstruktur (5) kooperiert, und einer Entriegelungsstellung radial verschiebbar ist;
eine Feder (18) spannt die innere Hülsenstruktur (5) mit Bezug auf die äußere Hülsenstruktur (6) in axialer Richtung vor;
gekennzeichnet durch folgende Merkmale:
der Seilzug weist ein Betätigungsorgan (14) auf, das verschieblich auf der äußeren Hülsenstruktur (6) angebracht ist;
das Betätigungsorgan (14) und das Verriegelungsorgan (13) weisen ein erstes Paar von zusammenwirkenden Rampenflächen (21, 23), die derart angeordnet sind, daß eine axiale Verschiebung des Betätigungsorgans (14) in eine erste Richtung das Verriegelungsorgan (13) in Richtung seiner Entriegelungsstellung zu verschieben sucht, ferner ein zweites Paar von zusammenwirkenden Rampenflächen (22, 24) auf, die in der Weise angebracht sind, daß eine axiale Verschiebung des Betätigungsorgans (14) in eine der ersten Richtung entgegengesetzte, zweite Richtung das Verriegelungsorgan (13) in seine Verriegelungsstellung drängt;
die Feder (18) ist zwischen der inneren Hülsenstruktur (5) und dem Betätigungsorgan (14) angeordnet und drängt dieses in die zweite Richtung.

2. Seilzug nach Anspruch 1, dadurch gekennzeichnet, daß das Betätigungsorgan (14) rohrförmig ist und einen auf der äußeren Hülsenstruktur (6) gleitend geführten zylindrischen Teil (15) sowie einen konischen Teil (16) aufweist, der sich in Gegenrichtung zur Feder (18) ausweitet und die Rampenflächen (21, 22) bildet.

3. Seilzug nach Anspruch 2, dadurch gekennzeichnet, daß die Rampenflächen (21, 22) des Betätigungsorgans (14) durch einen im Querschnitt T-förmigen Schlitz gebildet sind, der sich in axialer Richtung in dem konischen Teil (16) erstreckt und daß das Verriegelungsorgan (13) ein äußeres Teil (25) aufweist, welches wenigstens ein seitliches, U-förmiges Profil besitzt, welches in den T-förmigen Schlitz eingreift.

4. Seilzug nach Anspruch 2 oder 3, dadurch gekennzeichnet, daß der konische Teil (16) sich mit dem zylindrischen Teil (15) über eine Schulter (17) verbindet, die eine Stütze für die Feder (18) bildet.

5. Seilzug nach einem der vorhergehenden Ansprüche, dadurch gekennzeichnet, daß die inneren und äußeren Hülsenstrukturen (5, 6) jeweils zu beiden Seiten des Betätigungsorgans (14) je eine Zone vergrößerten Durchmessers (20, 26) zur Anbringung einer rohrförmigen Schutzhülle (27) aufweisen.

6. Seilzug nach Anspruch 5, dadurch gekennzeichnet, daß eine erste (20) dieser Zonen vergrößerten Durchmessers (20, 26) einen äußeren Durchmesser aufweist, der größer als der maximale äußere Durchmesser des Betätigungsorgans (14) ist, und daß die Schutzhülle (27) aus einer schlauchförmigen dehnbaren Plastikfolie besteht, die durch axialen Eingriff über diese erste Zone vergrößerten Durchmessers (20) ausgeweitet und danach mit den Zonen vergrößerten Durchmessers (20, 26) fest verbunden wird.

7. Seilzug nach Anspruch 6, dadurch gekennzeichnet, daß die Plastikfolie (27) aus Polyethylen besteht.

8. Seilzug nach einem der vorhergehenden Ansprüche, dadurch gekennzeichnet, daß die Hülsenstrukturen (5, 6) das Verriegelungsorgan (13) und das Betätigungsorgan (14) aus Kunststoffmaterial hergestellt sind.

9. Seilzug nach einem der vorhergehenden Ansprüche, dadurch gekennzeichnet, daß die Führungshülle in zwei Führungshüllenabschnitte (2a, 2b) geteilt ist, die jeweils mit einer zugehörigen Hülsenstruktur (5, 6) fest verbunden sind.

FIG-1

FIG-2

FIG-3